# EUROPÄISCHE PATENTSCHRIFT

(11) **EP 1 673 208 B1**
(45) Veröffentlichungstag und Bekanntmachung des Hinweises auf die Patenterteilung: **27.02.2008**
(21) Anmeldenummer: 04790189.7
(22) Anmeldetag: 08.10.2004
(51) Int. Cl.: B29C 45/16, B29C 45/04

(54) **HORIZONTAL-SPRITZGIESSMASCHINE MIT DREHEINRICHTUNG**
HORIZONTAL INJECTION MOLDING MACHINE COMPRISING A TURNING DEVICE
MACHINE DE MOULAGE PAR INJECTION HORIZONTALE POURVUE D'UN DISPOSITIF TOURNANT

(30) Priorität: 09.10.2003 DE 10347638
(43) Veröffentlichungstag der Anmeldung: 28.06.2006
(73) Patentinhaber: KraussMaffei Technologies GmbH, 80997 München (DE)
(72) Erfinder: LICHTINGER, Peter, 82256 Fürstenfeldbruck (DE)
(74) Vertreter: Wilhelm, Ludwig
(86) Internationale Anmeldenummer: PCT/EP2004/011237
(87) Internationale Veröffentlichungsnummer: WO 2005/035218

(56) Entgegenhaltungen:
- EP-A- 1 306 186
- WO-A-00/12284
- WO-A-01/10624
- WO-A-02/40196
- WO-A-03/013824
- DE-A- 10 152 394
- DE-U- 29 611 733
- FR-A- 1 559 051
- US-A1- 2003 077 354
- JOHANNABER FRIEDRICH, MICHAELI, WALTER: "Handbuch Spritzgiessen" 13. November 2001 (2001-11-13), CARL HANSEN VERLAG , MÜNCHEN , XP002313366 Seite 506 - Seite 509
- PATENT ABSTRACTS OF JAPAN Bd. 018, Nr. 650 (M-1719), 9. Dezember 1994 (1994-12-09) -& JP 06 254906 A (MITSUBISHI HEAVY IND LTD), 13. September 1994 (1994-09-13) in der Anmeldung erwähnt

## Beschreibung

Die vorliegende Erfindung betrifft eine Horizontal-Spritzgießmaschine mit einer um eine vertikale Achse drehbaren Dreheinrichtung für Formhälften gemäß den Merkmalen des Oberbegriffs des Patentanspruchs 1.

Eine Horizontal-Spritzgießmaschine dieser Art ist beispielsweise aus der WO 03/013824 A1 bekannt, bei der die Dreheinrichtung für die Formhälften in einem stationären Rahmen gelagert ist, der auf einem Maschinenbett befestigt ist und von den Holmen der Spritzgießmaschine durchsetzt wird. Der Nachteil dieser Anordnung ist einerseits darin zu sehen, dass aufgrund der Rahmenkonstruktion für die stationäre Dreheinheit nur ein Zweitakt-Betrieb möglich ist, da die auf der Dreheinrichtung gelagerten Formhälften seitlich nicht zugänglich sind, und so keine zusätzlichen Bearbeitungsschritte, wie beispielsweise eine Entnahme fertig gespritzter Teile oder ein Einlegen von Einlegeteilen in noch auszuspritzende Formhälften von der Seite der Maschine ausgeführt werden können, während in weiteren Formpaaren gerade ein Einspritzen stattfindet. Zusätzlich muss für die Entnahme der Formteile zwischen die beiden Formhälften gegriffen werden, es ist also keine leichte Zugänglichkeit gegeben. Ein weiterer Nachteil dieser Vorrichtung ist darin zu sehen, dass durch die Größe des Rahmens die maximale Größe der einsetzbaren drehenden Formhälften beschränkt wird, was insbesondere bei der Herstellung von großflächigen Spritzgussteilen eine starke Einschränkung darstellt.

Auch aus der JP 06254906 A ist ebenfalls eine Spritzgießmaschine mit Dreheinrichtung bekannt, bei der die Holme durch einen Rahmen der Dreheinrichtung geführt sind. Hier werden die beweglichen Formaufspannplatten über hydraulische Verfahrzylinder bewegt, die seitlich am Rahmen der Dreheinrichtung angelenkt sind. Diese müssen symmetrisch zu einer Längsachse der Spritzgießmaschine an den Formaufspannplatten angreifen, um eine ausreichende Zentrierung zu gewährleisten. In einer Öffnungsstellung können die Formaufspannplatten so weit auseinandergefahren werden, dass die Holme aus einer der beiden Formaufspannplatten herausgezogen werden. Der Nachteil auch dieser Vorrichtung ist, dass durch die Größe des Rahmens die Größe der einsetzbaren Formhälften beschränkt ist, und dass weiterhin durch den Rahmen die Zugänglichkeit zu den Formen erschwert wird und es nicht möglich ist, mehr als zweitaktig zu fahren.

Aus der WO 02/40196 A2 ist eine Horizontal-Spritzgießmaschine mit einer stationären Dreheinrichtung bekannt, auf die Formaufspannplatten zu und von dieser weg bewegt sowie mit dieser verriegelt werden können. Die Dreheinrichtung umfaßt eine Grundplatte, auf der ein Drehteller drehbar gelagert ist, wobei sich die Lagerung zwischen der Grundplatte und dem Drehteller befindet, so dass der Drehteller einseitig gelagert um eine vertikale Achse drehbar ist. Die Grundplatte ist auf dem Boden abgestellt und mit Maschinengestellen verbunden, auf denen jeweils eine Formaufspannplatte verschieblich abgestützt ist.

Die ältere Europäische Patentanmeldung EP-A-1512512 offenbart eine Horizontal-Spritzgießmaschine, mit zwei entlang einer Maschinenlängsachse auf einem Maschinenbett beweglichen Formaufspannplatten, mit einer zwischen den Formaufspannplatten stationär auf dem Maschinenbett angeordneten Dreheinrichtung, mit Mitteln zum Verfahren der Formaufspannplatten relativ zur Dreheinrichtung und mit Holmen zwischen den beiden Formaufspannplatten zur Aufnahme der Schließkraft.

Aufgabe der vorliegenden Erfindung ist es, eine Horizontal-Spritzgießmaschine der angegebenen Art vorzustellen, die auch bei Großmaschinen mit sehr großformatigen Formhälften zum Einsatz kommen kann, dabei sowohl einen durchdrehenden als auch einen reversibel geführten Viertakt-Betrieb erlaubt. Diese Horizontal-Spritzgießmaschine soll auch für Reinraumanwendungen geeignet sein. Dabei muss die Maschine eine ausreichende Stabilität gewährleisten, so dass auch hochpräzise großflächige Mehrkomponenten-Kunststoffteile hergestellt werden können.

Die Lösung dieser Aufgabe erfolgt durch eine Horizontal-Spritzgießmaschine mit den Merkmalen des Patentanspruchs 1, die weiteren Patentansprüche betreffen vorteilhafte Ausgestaltungen der Erfindung.

Bei der erfindungsgemäßen Horizontal-Spritzgießmaschine weist die Dreheinrichtung eine Grundplatte auf, die stationär auf dem Maschinenbett zwischen den beiden beweglichen Formaufspannplatten angeordnet ist und die nicht im Eingriff mit Holmen der Spritzgießmaschine steht. Auf dieser Grundplatte ist ein Drehteller um eine vertikale Achse drehbar gelagert. Beispielsweise über einen sich entlang der Drehachse durch die Grundplatte erstreckenden Drehzapfen (Rotor) wird dieser Drehteller angetrieben. Hierzu dient als Antriebsmittel bevorzugt ein Hydro- oder Elektromotor, der mit dem Drehteller bzw. dem Drehzapfen in Eingriff steht, wobei der Antrieb über ein Zahnrad erfolgen kann, das mit einem am Drehteller vorgesehenen Zahnkranz kämmt. Die Übersetzung ist in jedem Fall auf den Einsatzzweck abzustimmen.

Bei der erfindungsgemäßen Dreheinrichtung ist auf dem Drehteller eine Trägervorrichtung angeordnet, an der Formhälften angebracht werden können.

Dadurch dass die Dreheinrichtung erfindungsgemäß vollständig von den Holmen losgelöst ist, weist eine dergestalte Horizontal-Spritzgießmaschine nicht die aus dem Stand der Technik bekannten Einschränkungen auf. Insbesondere können Formhälften beliebiger Größe auf der Trägervorrichtung zum Einsatz kommen, ohne dass dabei auf die Dimensionierung eines Tragrahmens Rücksicht genommen werden müsste. Es besteht nur noch die Einschränkung, dass die Formhälften bei der Drehbewegung die Holme nicht berühren dürfen. Solange sie jedoch beispielsweise eine vertikale Erstreckung aufweisen, die kleiner als der vertikale Holmabstand der Spritzgießmaschine ist, ist die Breite und Tiefe der Formhälften nur durch den bei geöffneten Formaufspannplatten verfügbaren Platz beschränkt, der Öffnungshub der Platten ist also der begrenzende Faktor.

Da die Dreheinrichtung nur auf dem Maschinenbett gelagert ist, ergibt sich zusätzlich eine Vereinfachung in der Zuführung von Medien zu den drehbar gelagerten Formhälften. Kühlwasser, Öl, Luft können durch Drehdurchführungen zugeleitet werden, die Anschlussverbindungen befinden sich im Bereich des Maschinenbetts, und auch Kabel zum Übermitteln bzw. Abgreifen von Signalen sind einfach zu durchzuführen. Dies macht sich insbesondere auch beim Einsatz solcher Spritzgießmaschinen mit Dreheinrichtung unter Reinraumbedingungen bemerkbar. Da die beweglichen Teile der Dreheinrichtung nur auf der unterhalb der Formen befindlichen Grundplatte beweglich gelagert sind, und keine weiteren abstützenden Teile benötigt werden, ist der Einsatz einer durchgehenden Reinluft-Flowbox, die eine laminare Luftströmung von oberhalb der Maschine zu dem Maschinenbett hin bewirkt, möglich, so dass Abriebpartikel oder ähnliche Verunreinigungen nicht in Kontakt mit den hergestellten Spritzgussteilen kommen können.

Über eine entsprechende Dimensionierung der Grundplatte sowie der Lagerung des Drehtellers, kann eine ausreichende Stabilität der Dreheinrichtung auch bei Einsatz sehr großer Formhälften mit hohen Gewichten erzielt werden. Hierbei ist immer auf eine entsprechende Justierung der Formhälften auf der Trägervorrichtung zu achten, insbesondere sollte die Drehachse durch den Schwerpunkt der Dreheinrichtung samt Formhälften gehen, um höchste Präzision in der Drehbewegung zu gewährleisten.

Erfindungsgemäß ist die Trägervorrichtung zum Anbringen von mindestens zwei Formhälften geeignet, die wechselweise mit verschiedenen, an den beweglichen Formaufspannplatten gelagerten Formhälften in Kontakt gebracht werden können. Es ist allerdings auch möglich, immer dieselben Formhälften in Eingriff zu bringen. Jede Drehbewegung der Dreheinrichtung kann nur bei geöffneten Formen, also nach einem Wegfahren der beweglichen Formaufspannplatten von der Dreheinrichtung erfolgen.

Anstelle einer Trägerplatte kann als Trägervorrichtung auch ein Trägerblock zum Einsatz kommen, der bevorzugt vier Formhälften tragen kann. Die erfindungsgemäße Horizontal-Spritzgießmaschine ist dann im Viertakt-Verfahren betreibbar.

Im Gebrauch hat es sich als vorteilhaft erwiesen, wenn die Dreheinrichtung Mittel für eine Höhenanpassung aufweist, durch die die Formhälften, die auf der Trägervorrichtung angebracht werden, exakt auf die Höhe der an den beweglichen Formaufspannplatten gehalterten Formhälften, mit denen sie unter Bildung einer Formkavität zusammenwirken, angepaßt werden können. Hierfür haben sich beispielsweise Adapterplatten als vorteilhaft erwiesen, die auf dem Drehteller angebracht werden, und die Formhälften auf diesem abstützen. Durch diese wird auch die Stabilität der Vorrichtung erhöht.

Zum Schließen bzw. Öffnen der Formen, d.h. zum Verfahren der beweglichen Formaufspannplatten relativ zur Dreheinrichtung der erfindungsgemäßen Horizontal-Spritzgießmaschine werden bevorzugt mindestens zwei Verfahrzylinder eingesetzt, die unabhängig von den zum Aufbringen der Schließkraft vorgesehenen Holmen an den Formaufspannplatten angreifen. Hierbei ist es jedoch durchaus auch denkbar, dass Verfahrbewegung über andere Mechanismen bewerkstelligt wird, beispielsweise über einen elektrisch angetriebenen Spindeltrieb.

Gemäß einer besonders bevorzugten Ausgestaltungsform handelt es sich bei der erfindungsgemäßen Horizontal-Spritzgießmaschine um eine Zweiplattenmaschine, die sich durch eine besonders kurze Bauweise auszeichnet. Es kann jedoch auch eine beliebige andere aus dem Stand der Technik bekannte Bauart zum Einsatz kommen, beispielsweise eine Spritzgießmaschine mit vier Platten, von denen zwei stationäre Abstützplatten und zwei bewegliche Formaufspannplatten sind und bei der die Dreheinrichtung zwischen den beiden beweglichen Formaufspannplatten angeordnet ist.

Im Fall einer Zweiplattenmaschine ist mindestens ein Verfahrzylinder direkt an einer der beiden beweglichen Formaufspannplatten und an der stationären Grundplatte der Dreheinrichtung bzw. direkt am Maschinenbett angelenkt, während der zumindest eine weitere Verfahrzylinder an der anderen beweglichen Formaufspannplatte und der stationären Grundplatte bzw. dem Maschinenbett angreift. Gemäß einer besonders bevorzugten Ausgestaltungsform sind jedoch für jede der Formaufspannplatten zwei Verfahrzylinder vorgesehen, die bezüglich der Maschinenlängsachse gegenüberliegend in einem unteren seitlichen Bereich der Formaufspannplatten angreifen, wodurch sie den Raum zwischen den Holmen für Bearbeitungs- und Entnahmeoperationen freilassen. Die symmetrische Anordnung bezüglich der Maschinenlängsachse wirkt sich vorteilhaft auf die Stabilität und Zentrierung der Maschine aus.

Besonders bevorzugt ist die Ausgestaltung, bei der die Holme an einer der beweglichen Formaufspannplatten unter Zwischenschaltung von Mitteln zum Aufbringen des Schließdrucks angelagert sind. Hierunter kann beispielsweise eine Ausgestaltung der beweglichen Formaufspannplatte nach Art einer sogenannten Sandwich-Platte verstanden werden, bei der diese bewegliche Formaufspannplatte aus einer fest mit den Holmen verbundenen Abstützplatte und einer verschieblich an den Holmen gelagerten Formträgerplatte besteht, zwischen denen beispielsweise hydraulische Druckkolben zum Aufbringen der Schließkraft angeordnet sind. Aus dem Stand der Technik sind jedoch auch andere Möglichkeiten zum Aufbringen des Schließdrucks bekannt.

An der zweiten Formaufspannplatte sind die Holme verschieblich gelagert, wobei sie diese zumindest in einer Schließstellung durchsetzen und in geöffnetem Zustand zumindest teilweise bzw. zeitweise durchgehend in sie eintauchen. Es kann vorteilhaft sein, die Holme in der Formaufspannplatte, in der sie verschieblich gelagert sind, durchgehend eintauchen zu lassen, um so eine Zentrierung der Formaufspannplatten zu erleichtern. Generell ist es jedoch bevorzugt, dass die Platten in Linear- bzw. Gleitführungen unkippbar und mit geringer Toleranz längsbeweglich gelagert sind, so dass eine zusätzliche Führungsfunktion der Holme nicht erforderlich ist. Der Hub der Öffnungsbewegung kann daher auch so groß gewählt werden, dass die Holmenden nicht länger in die Platte eintauchen, wodurch die Zugänglichkeit zu der auf dieser Formaufspannplatte angebrachten Formhälfte verbessert wird.

Bevorzugt sind die Holme an der Formaufspannplatte, an der sie verschieblich gelagert sind, verriegelbar ausgebildet. Hierzu ist es beispielsweise bekannt, die Enden der Holme mit sägezahnförmigen Rillenausnehmungen zu versehen, die mit auf der von der Formhälfte abgewandten Seite der Formaufspannplatte angebrachten ansteuerbaren Zahnbackenpaaren zusammenwirken, die im Schließzustand der Formen in die entsprechenden Ausnehmungen der Holme greifen und so die Formaufspannplatten verriegeln. Es sind aber auch andere Verriegelungsmechanismen bekannt, auf die nicht näher eingegangen werden soll.

Die exakte Zentrierung der jeweils zusammenwirkenden Formhälften beim Heranfahren einer Formaufspannplatte samt Formhälfte an die Dreheinrichtung mit der von dieser getragenen entsprechenden Formhälfte ist aus dem Stand der Technik bekannt und kann beispielsweise durch den Einsatz eines Zentrierpins, der auf einer der Formhälften vorgesehen ist, und der mit einer entsprechenden Ausnehmung in der anderen Formhälfte zusammenwirkt, erzielt werden.

Die Ausgestaltungsform der erfindungsgemäßen Spritzgießmaschine, bei der die Trägervorrichtung als auf dem Drehteller gelagerte vertikale Trägerplatte ausgestaltet ist, auf deren Vorder- und Rückseite jeweils eine Formhälfte angebracht werden kann, eignet sich beispielsweise zur Herstellung von großflächigen Kunststoffteilen, die im Zweikomponenten-Verfahren hergestellt werden sollen. Hierbei wird die Horizontal-Spritzgießmaschine im Zweitaktverfahren betrieben, wobei im ersten Takt in einer Schließstellung der Spritzgießmaschine in einer aus den auf der Trägerplatte und der einen Formaufspannplatte angebrachten Formhälften gebildeten Form ein Grundteil des Kunststoffteils aus einer ersten Komponente gespritzt wird. Dann wird die Spritzgießmaschine geöffnet, d.h. beide beweglichen Formaufspannplatten werden von der Dreheinrichtung weggefahren und die Dreheinrichtung dreht um 180°, so dass die Formhälfte, die das Grundteil enthält, mit der an der anderen Formaufspannplatte angebrachten Formhälfte zur Deckung kommt. Im zweiten Takt wird auf das im vorherigen Takt hergestellte Grundteil die zweite Komponente entsprechend der vorgesehenen Formausgestaltung gespritzt, während gleichzeitig in dem auf der anderen Seite der Trägerplatte angeordneten Werkzeug ein neues Grundteil hergestellt wird. Beim neuerlichen Öffnen der Formaufspannplatten wird das fertige Zweikomponenten-Kunststoffteil entnommen. Dies kann vorteilhaft auch in einer Drehstellung der Dreheinrichtung erfolgen, die um 90° gegenüber einem Einspritzvorgang verfahren ist. So kann von der Maschinenseite zwischen den Holmen hindurch auf die geöffnete Formhälfte frontal zugegriffen werden. Die Entnahmezeit verlängert hierbei die Zykluszeit. Dieses Verfahren eignet sich insbesondere für sehr großflächige Kunststoffteile, bei denen die von den auf der Trägerplatte montierten Formhälften überstrichene Grundfläche sehr groß ist.

Bei der erfindungsgemäßen Horizontal-Spritzgießmaschine kann aber auch eine Trägervorrichtung in Form eines Trägerblocks zum Einsatz kommen, der vier Formhälften tragen kann. Diese Ausgestaltung eignet sich insbesondere zum Anwenden eines sogenannten Viertakt-Verfahrens, also beispielsweise beim Herstellen von großflächigen Kunststoffteilen, die im Zweikomponenten-Verfahren hergestellt werden und bei denen Einlegeteile nach dem ersten Takt, d.h. nach dem Spritzen eines Grundteils eingesetzt werden. Beim Betrieb einer Spritzgießmaschine mit einem solchen Trägerblock auf dem Drehteller der Dreheinrichtung wird derart vorgegangen, dass im ersten Takt in einem geschlossenen Zustand der Spritzgießmaschine ein Grundteil gespritzt wird, im zweiten Takt nach einer 90°-Drehung der Dreheinrichtung mit dem die Formhälften tragenden Trägerblocks von seitlich der Spritzgießmaschine beispielsweise mit Hilfe von Robotern die Einlegeteile eingesetzt werden, in einem anschließenden Takt die Dreheinrichtung wiederum um 90° weitergefahren ist, und eine zweite Komponente in die Form mit dem Grundteil und dem bzw. den Einlegeteilen gespritzt wird. Während dieses Taktes wird gleichzeitig auch in der dieser diagonal gegenüberliegenden Form ein weiteres Grundteil aus der ersten Kunststoffkomponente gespritzt. Im vierten Takt dreht die Dreheinrichtung wieder um 90° weiter, so dass das fertige Mehrkomponententeil bevorzugt an einer Entnahmestation mit beispielsweise einem Roboter oder einer ähnlichen Vorrichtung entnommen werden kann. Zeitgleich hierzu werden auf der gegenüberliegenden Seite des Trägerblocks in die das Grundteil enthaltende Formhälfte die Einlegeteile eingesetzt und in den benachbarten Formhälften bereits wieder ein Grundteil bzw. ein fertiges Teil gespritzt. Dadurch dass bei dem Viertakt-Betrieb Entnahme und Einlegen parallel erfolgen, während gleichzeitig ein Einspritzvorgang ausgeführt wird, hier verlängert die Entnahme bzw. das Einlegen nicht die Zykluszeit.

Es besteht jedoch auch die Möglichkeit, mit einer erfindungsgemäßen Horizontal-Spritzgießmaschine vorteilhaft großflächige Einkomponenten-Kunststoffteile herzustellen, wobei ein Trägerblock vier bzw. zwei gleiche Formhälften trägt, die mit zwei weiteren an den beweglichen Formaufspannplatten angebrachten Formhälften zusammenwirken. So können in jeder Schließstellung der Spritzgießmaschine zwei gleiche Teile hergestellt werden, nach einem Öffnen der Formaufspannplatten wird die Dreheinrichtung um 90° verstellt, und die Formaufspannplatten werden wieder in eine Schließstellung gebracht. Während zwei weitere gleiche Teile hergestellt werden, können die im vorherigen Takt erzeugten Teile seitlich zwischen den Holmen von entsprechenden Entnahmevorrichtungen aus den sie haltenden Formhälften entnommen werden. Bei dieser Betriebsweise kann die Dreheinrichtung entweder in jedem Takt um 90° weitergedreht, also durchdrehend betrieben werden, wofür sich auf dem Trägerblock vier identische Formhälften befinden müssen. Wenn der Trägerblock zwei verschiedene Arten von Formhälften trägt, die sich jeweils gegenüberliegen, taktet die Dreheinrichtung 90° reversierend, d.h. es werden je Takt parallel zwei unterschiedliche Teile gespritzt, im folgenden Takt werden bei 90° gedrehtem Trägerblock wieder zwei unterschiedliche Teile hergestellt, während die im vorhergehenden Takt erzeugten Teile seitlich zwischen den Holmen entnommen werden. Im folgenden Zyklus dreht die Dreheinrichtung zurück, so dass wieder zwei unterschiedliche Teile erzeugt werden können, während die zuvor erzeugten entnommen werden. Bei dieser Betriebsweise lassen sich eine große Anzahl an Kunststoffteilen in sehr kurzer Zykluszeit herstellen.

Eine besonders bevorzugte Ausführungsform einer Horizontal-Spritzgießmaschine gemäß der vorliegenden Erfindung soll anhand der Figuren noch näher beschrieben werden. Es zeigen:
- Fig.1:: eine schematische Darstellung einer Zweiplattenspritzgießmaschine in geschlossenem Zustand im Längsschnitt entlang der Maschinenlängsachse,
- Fig. 2:: die Spritzgießmaschine gemäß Figur 1 im Längsschnitt in geöffnetem Zustand, wobei die Schnittebene im Bereich der Formaufspannplatten nach hinten springt,
- Fig. 3:: eine schematische Schnittansicht der Spritzgießmaschine gemäß Figur 2 entsprechend der Schnittlinie III-III in Teilansicht,
- Fig. 4:: eine schematische Draufsicht auf eine erfindungsgemäße Spritzgießmaschine, wobei die Dreheinrichtung eine Trägerplatte aufweist,
- Fig. 5:: eine schematische Draufsicht auf eine erfindungsgemäße Spritzgießmaschine, wobei die Dreheinrichtung einen Trägerblock aufweist,
- Fig. 6:: schematische Darstellung des Antriebs des Drehtellers, und
- Fig. 7:: schematische Darstellung weiterer Möglichkeiten zum Anbringen der Verfahrzylinder.

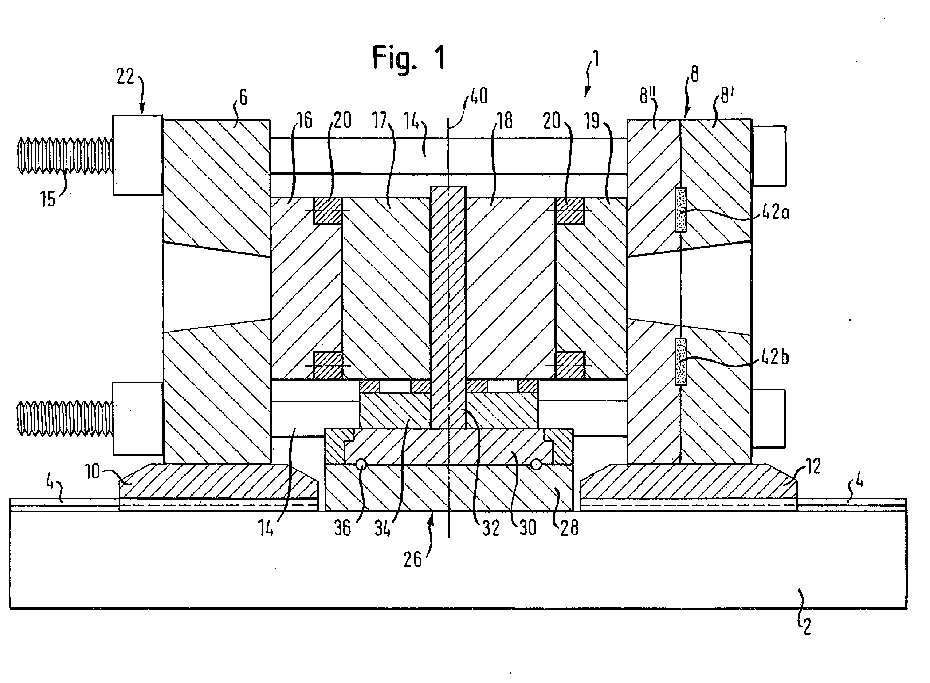

In der Figur 1 ist eine erfindungsgemäße Spritzgießmaschine 1 schematisch in einem Längsschnitt entlang der Maschinenlängsachse dargestellt. Auf einem Maschinenbett 2 sind zwei bewegliche Formaufspannplatten 6, 8, mit Gleitschuhen 10, 12 auf Linearführungen 4 derart gelagert, dass sie zwar längs verschieblich jedoch nicht verkippbar sind.

Die Formaufspannplatten 6, 8 sind durch Holme 14 verbunden, von denen man nur die hinter der Schnittebene liegenden beiden Holme sieht, und deren Verlauf durch die Formaufspannplatten in der Figur 1 angedeutet ist. Die in der Figur 1 rechte Formaufspannplatte 8 ist als sogenannte Sandwich-Platte ausgeführt, und weist zwei in sehr geringem Parallelabstand angeordnete Platten auf, von denen die eine als Abstützplatte 8', an der die Holme 14 befestigt sind, und die andere als Formträgerplatte 8" ausgeführt ist, die auf den Holmen 14 verschieblich gelagert ist. Zwischen der Abstützplatte 8' und der Formträgerplatte 8" befinden sich hydraulische Druckkolben oder Druckkissen 42a und 42b, mittels derer bei verriegelten Formaufspannplatten 6, 8 die Schließkraft aufgebracht werden kann.

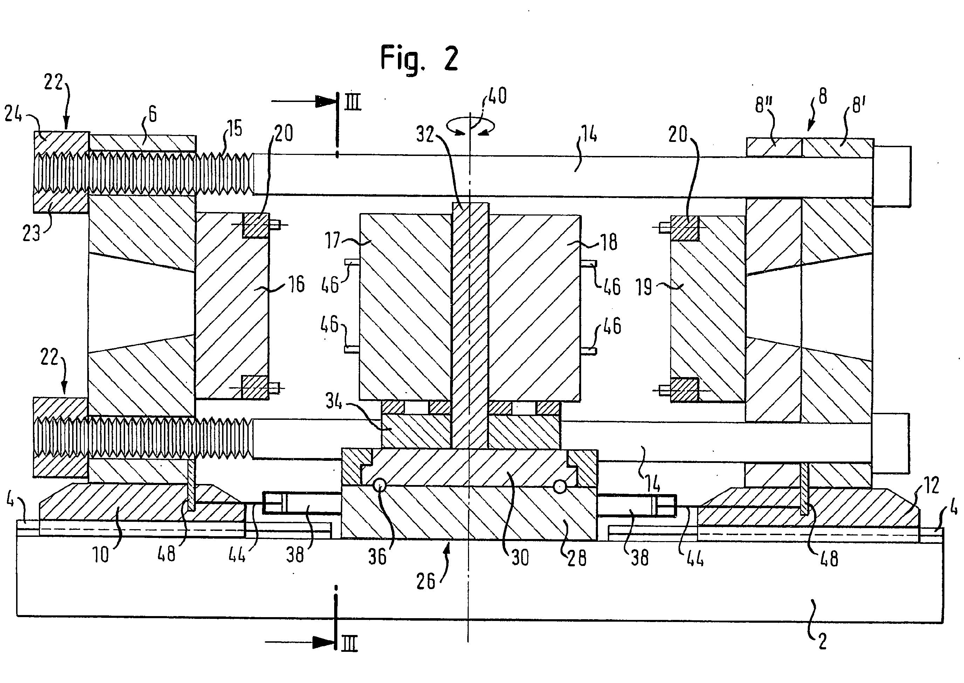

In der linken Formaufspannplatte 6 sind die Holme 14 verschieblich gelagert und können bei einer besonders weiten Öffnungsbewegung auch gänzlich aus der Formaufspannplatte 6 herausgezogen werden. Die linken Endstücke der Holme 14 sind profiliert ausgeführt, beispielsweise nach Art sägezahnförmiger Rillen 15. An der Außenseite der beweglichen Formaufspannplatte 6 ist ein Verriegelungssystem 22 vorgesehen, das (siehe Figur 2) pro Holm 14 aus zwei halbschalenförmigen, ansteuerbaren Backen 23 und 24 besteht, die in der Verriegelungsstellung mit dem Rillenprofil 15 an den Holmen 14 in Eingriff stehen. Dieses Verriegelungssystem wird beispielsweise hydraulisch angesteuert.

Die Formaufspannplatten 6, 8 tragen Formhälften 16 bzw. 19, die mit jeweils zugeordneten Formhälften 17 bzw. 18 zusammenwirken und im Schließzustand Formkavitäten zur Aufnahme von plastifiziertem Material bilden. Zur Zuführung dieses Materials weisen die Formaufspannplatten 6, 8 mittig nicht näher bezeichnete Ausnehmungen auf, durch die nicht dargestellte Einspritzaggregate an die Formkavitäten angekoppelt werden können. Diese Einspritzaggregate können entweder auf demselben Maschinenbett 2 oder aber auf separaten sich gemäß der Figuren 1 und 2 links bzw. rechts anschließenden Maschinenbetten verschiebblich gelagert sein und jeweils erst im Verschlusszustand der Formaufspannplatten angedockt werden, was insbesondere bei Einspritzaggregaten mit hoher Plastifizierleistung von Vorteil ist; sie können aber auch direkt an die Formaufspannplatten 6, 8 angeflanscht sein und mit diesen mitbewegt werden.

Zwischen den beiden Formaufspannplatten 6, 8 befindet sich, fest mit dem Maschinenbett 2 verbunden, eine Dreheinrichtung 26, mittels derer die Formhälften 17, 18 wechselweise mit den an den Formaufspannplatten 6, 8 fixierten Formhälften 16, 19 in Kontakt gebracht können. Es ist aber durchaus auch möglich, dass jede Formhälfte 17, 18 jeweils nur mit einer an einer Formaufspannplatte 6, 8 fixierten Formhälfte 16, 19 zusammenwirkt, wobei jedoch durch Einsatz der Dreheinrichtung das Handling bei der Entnahme und/oder beim Bestücken der Formhälften vereinfacht wird.

Die Dreheinrichtung 26 weist eine stationäre und fest mit dem Maschinenbett 2 verbundene Grundplatte 28 auf, auf der ein Drehteller 30 um eine vertikale Drehachse 40 drehbar gelagert ist. Diese Lagerung erfolgt beispielsweise über Kugellager 36 und einen nicht näher dargestellten Lagerzapfen, der entlang der Drehachse 40 angeordnet ist. Der Lagerzapfen kann auch als Drehdurchführung ausgeführt und mit Anschlüssen für ein Kühl- und/oder Heizmedium ausgebildet sein. Auf dem Drehteller 30 ist eine Formträgerplatte 32 fix angeordnet, die mit dem Drehteller 30 drehbar ist, und an der Formhälften 17, 18 befestigt sind. Um eine stabile Höhenabstützung der Formhälften 17, 18 an der Formträgerplatte 32 sicherzustellen, können zwischen dem Drehteller 30 und den Formhälften 17, 18 eine oder mehrere Adapterplatten 34 eingesetzt werden, die die Formhälften 17, 18 auf dem Drehteller 30 abstützen. Generell wird bei diesem Aufbau darauf geachtet, dass der Schwerpunkt des Drehtellers und der darauf gelagerten Formhälften 17, 18 sowie der Adapterplatten 34 auf der Drehachse 40 liegt, wodurch eine hohe Stabilität der Dreheinrichtung 26 zu erzielen ist. Die Dreheinrichtung 26 kann auch auf einem separaten Gestell gelagert und mit dem Maschinenbett nur verbunden sein. Desweiteren können die Formhälften 17 und 18 auch unmittelbar auf der Adapterplatte 34 oder dem Drehteller 30 montiert werden.

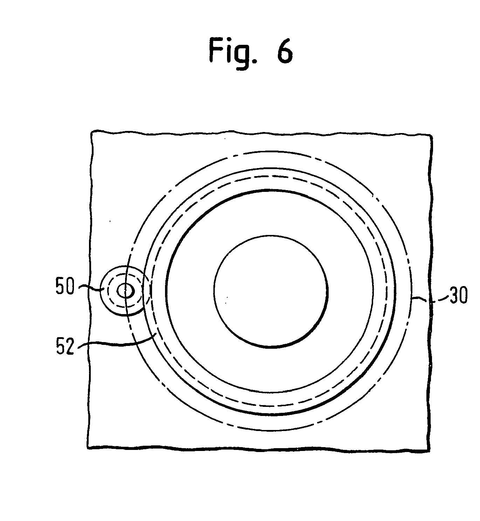

Die Dreheinrichtung 26 wird durch einen Elektro- oder Hydromotor drehangetrieben, beispielsweise über ein Zahnrad 50, das in einen am Drehteller 30 vorgesehenen Zahnkranz 52 eingreift (siehe hierzu Figur 6). Bei Erreichen der gewünschten Sollposition kann die Dreheinrichtung 26 mittels nicht näher dargestellter Verriegelungsmechanismen in der Sollposition arretiert werden.

In Figur 2 ist die Horizontal-Spritzgießmaschine 1 aus Figur 1 mit auseinandergefahrenen Formaufspannplatten 6, 8 dargestellt, wobei die Schnittebene im Bereich der Dreheinrichtung 26 auf der Maschinenlängsachse liegt und im Bereich der beweglichen Formaufspannplatten nach hinten in die Lage der Holme 14 springt, wobei der besseren Übersicht halber die Holme 14 selbst nicht geschnitten dargestellt sind. Schematisch sind in Figur 2 auch die an der stationären Grundplatte 28 befestigten Verfahrzylinder 38 mit den an den beweglichen Formaufspannplatten 6, 8 befestigten Kolbenstangen 44 dargestellt. Zum Anbringen der Kolbenstangen 44 können an der Unterseite der Formaufspannplatten 6 und 8' Befestigungslaschen 48 vorgesehen werden oder die Formaufspannplatten weisen in diesem Bereich nach unten ragende Vorsprünge auf. An den an den Formaufspannplatten angebrachten Formhälften 16, 19 sind Aufreißzylinder 20 vorgesehen, die dem schnellen Öffnen der Formen 16, 17 bzw. 18, 19 dienen. Diese Aufreißzylinder können beispielsweise hydraulisch betätigt werden und könnten alternativ an den drehbaren Formhälften 17, 18 vorgesehen werden. Bedarfsweise können in den Formhälften 17 und 18 auch Zentrierbolzen 46 vorgesehen werden, die beim Zufahren der Schließeinheit in entsprechende Bohrungen in den Formhälften 16 und 19 eintauchen können.

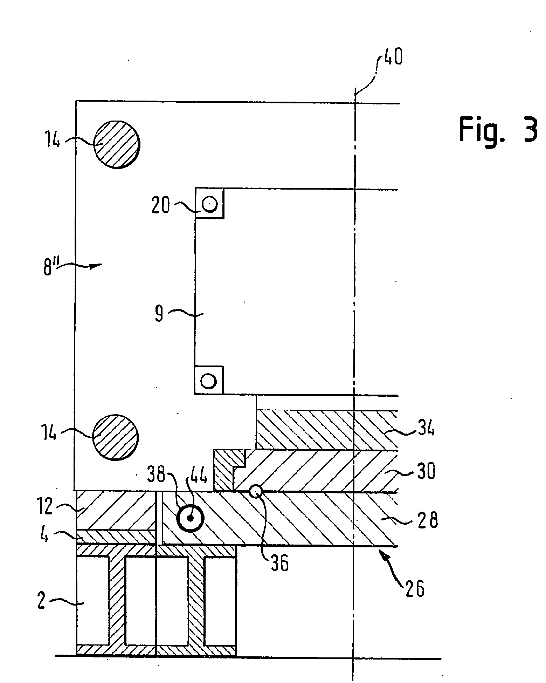

In Figur 3 ist eine partielle Schnittdarstellung der Spritzgießmaschine 1 entlang der Schnittlinie III-III aus Figur 2 gezeigt, wobei die Spritzgießmaschine symmetrisch zu einer vertikal durch die Maschinenlängsachse verlaufenden Ebene ist. Desweiteren sind der besseren Übersicht halber trotz der sich aufgrund der Schnittebene ergebenden Draufsicht die Grundplatte 28, der Drehteller 30 und die Adapterplatte 34 schraffiert dargestellt. Die bewegliche Formaufspannplatte 8" wird oben und unten von den Holmen 14 durchsetzt. An der auf dem Maschinenbett 2 stationär gelagerten Grundplatte 28 sind links und rechts der Maschinenlängsachse Verfahrzylinder 38 vorgesehen (siehe auch Figur 2), deren Kolbenstangen 44 an der beweglichen Formaufspannplatte 6 angreifen. Ebenso sind Verfahrzylinder 38 und Kolbenstangen 44 zwischen der Grundplatte 28 und der beweglichen Formaufspannplatte 8' angeordnet..Da sie in der Figur 3 hinter der Dreheinrichtung 26 liegen, sind diese Verfahrzylinder nicht sichtbar. Mittels der Verfahrzylinder 38 werden die beweglichen Formaufspannplatten 6, 8 relativ zu der auf dem Maschinenbett 2 stationären Dreheinrichtung 26 verfahren, um so die Öffnungs- und Schließbewegung der Formen 16, 17, 18, 19 der Spritzgießmaschine 1 zu bewirken. Gegebenenfalls können auch weitere Verfahrzylinder auf einer oder beiden Seiten der Grundplatte 28 vorgesehen werden. Bedarfsweise kann auch nur ein Verfahrzylinder 38 zu beiden Seiten der Grundplatte 28 vorgesehen werden, dann vorzugsweise in einer senkrechten Ebene mit der Maschinenlängsachse, d.h. mittig an der Grundplatte 28 befestigt. Anstelle der Hydraulikantriebe können auch Spindelantriebe zum Verfahren der beweglichen Formaufspannplatte 6 und 8 vorgesehen werden.

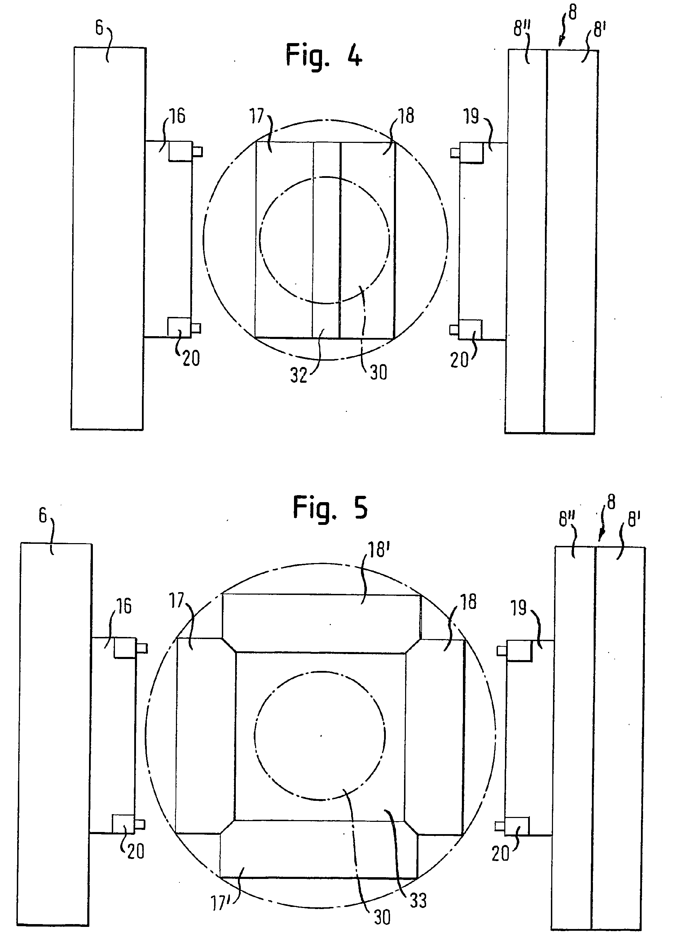

In der Figur 4 ist schematisch in der Draufsicht eine Spritzgießmaschine 1 gemäß der Figur 2 dargestellt. An der Formträgerplatte 32 sind Formhälften 17, 18 angebracht. Der äußere Drehkreis, der bei der Drehbewegung der Dreheinrichtung 26 von den Formhälften 17, 18 überstrichen wird, ist strichpunktiert eingezeichnet und muss in einer geöffneten Stellung der Formaufspannplatten 6, 8 frei gehalten werden. Zusätzlich muss dafür Sorge getragen werden, dass die Formhälften 17, 18 bei einer Drehbewegung nicht mit den hier nicht dargestellten Holmen 14 in Kontakt kommen können.

Der unter der Trägerplatte 32 liegende Drehteller 30 ist zur Verdeutlichung ebenfalls strichpunktiert dargestellt.

Figur 5 zeigt wie Figur 4 eine schematische Draufsicht auf eine Spritzgießmaschine, wobei jedoch als Formträgervorrichtung ein Trägerblock 33 vorgesehen ist, der auf dem wieder punktiert im Durchbruch dargestellten Drehteller 30 gelagert ist und auf dem vier Formhälften 17, 17', 18, 18' angebracht werden können, wodurch die erfindungsgemäße Horizontal-Spritzgießmaschine 1 im Viertakt-Betrieb gefahren werden kann. Wie durch den durchbrochenen äußeren Kreis dargestellt, wird bei dieser Anordnung der von den Formhälften 17, 17', 18, 18' überstrichene Radius größer als bei Einsatz von lediglich von zwei Formhälften wie in Figur 4. Dementsprechend muss auch der Hub der Öffnungsbewegung der beweglichen Formaufspannplatten 6, 8 bei Einsatz eines Trägerblocks 33 größer gewählt werden.

Im Betrieb einer erfindungsgemäßen Spritzgießmaschine 1 wird die Dreheinrichtung 26 betätigt, und soweit gedreht, bis sich auf der Formträgerplatte 32 oder dem Formträgerblock 33 gelagerte Formhälften 17, 17', 18, 18' in einer Sollposition befinden, in der sie mit den an den beweglichen Formaufspannplatten 6, 8 gelagerten Formhälften 16 bzw. 19 zur Deckung kommen. In dieser Stellung wird die Dreheinrichtung arretiert und die beweglichen Formaufspannplatten 6, 8 werden durch Ansteuern der Verfahrzylinder 38, die symmetrisch im unteren Bereich der Formaufspannplatten 6, 8 angreifen, in eine Schließstellung gefahren, in der die Formhälften 16 bzw. 19 mit den ihnen gegenüberliegenden, von der Dreheinrichtung 26 getragenen Formhälften 17 bzw. 18 zusammenwirken. Um hier eine passgenaue Übereinstimmung der Formhälften zu gewährleisten, können Zentriermittel vorgesehen sein, wie beispielsweise einer oder mehrere Zentrierbolzen 46 an einer der beiden Formhälften, der mit einer Bohrung an der entsprechenden gegenüberliegenden Formhälfte zum Eingriff kommt.

Sobald sich die Formaufspannplatten 6, 8 in Schließstellung befinden, werden die Verriegelungsbacken 23, 24 des Verriegelungssystems 22 betätigt und so die Formaufspannplatten 6, 8 miteinander verriegelt. Sodann wird durch Betätigen der Druckzylinder oder Druckkissen 42a und 42b zwischen der Abstützplatte 8' und der Formträgerplatte 8" der Schließdruck aufgebracht, Einspritzaggregate werden an die Formen 16, 17 bzw. 18, 19 angedockt und ein Einspritzvorgang findet statt. Nach vollendetem Einspritzvorgang und Beendigung einer eventuellen Nachdruckphase werden die Einspritzaggregate von den Formaufspannplatten 6, 8 weggefahren, die Verriegelung durch das Verriegelungssystem 22 wird gelöst, die Aufreißzylinder 20 werden betätigt, und so die Formen 16, 17; 18, 19 geöffnet. Hierzu werden die Formaufspannplatten 6, 8 durch die Verfahrzylinder 38 in die Öffnungsstellung gefahren.

Durch Drehen der Dreheinrichtung 26 um 90° können die Formhälften 17, 18, die noch das erzeugte Spritzgussteil enthalten, so positioniert werden, dass von der Maschinenseite leicht zugegriffen werden kann. Abhängig von der Betriebsweise können beispielsweise fertige Teile entnommen werden oder auf in einer ersten Komponente gespritzte Grundteile Einlegeteile aufgebracht werden, und bei Verwendung eines Trägerblocks gleichzeitig weitere Teile gespritzt werden.

Die vorliegende Erfindung ermöglicht es, auch großformatige und insbesondere großflächige Kunststoffteile im Ein- oder Mehrkomponenten-Spritzguss einfach herzustellen, wobei besonders vorteilhaft von der Seite der Spritzgießmaschine auf die Formhälften frontal zugegriffen werden kann und keine Beschränkung bezüglich des von den drehbar gelagerten Formhälften überstrichenen Radius durch einen die Dreheinrichtung umgebenden Rahmen gegeben ist. Die vorgestellten Maschinen eignen sich insbesondere auch für den Einsatz unter Reinraumanforderungen, da die beweglichen Teile, wie zum Beispiel die Verfahrzylinder 38 und das Zahnrad 50, nur in einem unteren Bereich der Dreheinrichtung angeordnet sind und so kontaminierender Staub oder emittierte Partikel durch Einsatz einer Flowbox in einer. Vorzugsrichtung abgeführt werden können, ohne mit den Formhälften oder hergestellten Spritzgussteilen in Kontakt zu kommen.

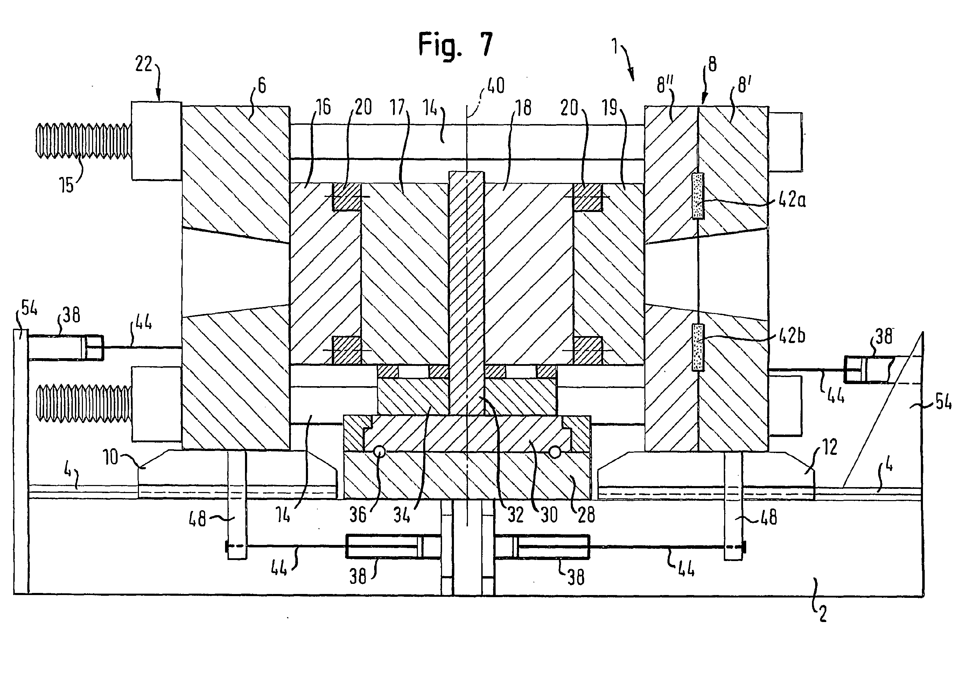

Die Figur 7 zeigt schematisch weitere Varianten zum Anbringen der Verfahrzylinder 38. Beispielsweise können die Verfahrzylinder 38 unterhalb (wie dargestellt) oder seitlich der Grundplatte 28 an dem Maschinenbett 2 und die Kolbenstangen 44 an entsprechend langen Befestigungslaschen 48 befestigt sein. Die Verfahrzylinder können aber auch hinter den Formaufspannplatten an mit dem Maschinenbett 2 verbundenen Abstützelementen 54 angebracht werden.

### Bezugszeichenliste

- 1: Horizontal-Spritzgießmaschine
- 2: Maschinenbett
- 4: Linearführungen
- 6, 8: bewegliche Formaufspannplatten
- 8': Abstützplatte
- 8": Formträgerplatte
- 10, 12: Gleitschuhe
- 14: Holme
- 15: Rillenprofil
- 16, 17, 18, 19: Formhälften
- 20: Aufreißzylinder
- 22: Verriegelungssystem
- 23, 24: Halbschalen
- 26: Dreheinrichtung
- 28: stationäre Grundplatte
- 30: Drehteller
- 32: Trägerplatte
- 33: Trägerblock
- 34: Adapterplatte
- 36: Kugellager
- 38: Verfahrzylinder
- 40: Drehachse
- 42a: Druckkolben oder Druckkissen
- 42b: Druckkolben oder Druckkissen
- 44: Kolbenstange
- 46: Zentrierbolzen
- 48: Befestigungslaschen
- 50: Zahnrad
- 52: Zahnkranz
- 54: Abstützelement

## Patentansprüche

1. Horizontalspritzgießmaschine mit zwei entlang einer Maschinenlängsachse beweglichen Formaufspannplatten (6, 8), mit einer zwischen den Formaufspannplatten stationär angeordneten Dreheinrichtung (26) für Formhälften (17, 17', 18, 18'), mit Mitteln zum Verfahren der Formaufspannplatten (6, 8) relativ zur Dreheinrichtung (26), mit Holmen (14) zwischen den beiden Formaufspannplatten (6, 8) zur Aufnahme der Schließkraft, mit einem Maschinenbett, auf dem die beiden Formaufspannplatten (6, 8) und die Dreheinrichtung (26) angeordnet sind, wobei die Dreheinrichtung (26) eine auf dem Maschinenbett (2) gelagerte und fest mit diesem verbundene Grundplatte (28) aufweist, auf der ein Drehteller (30) drehbar gelagert ist, und wobei sich die Lagerung (36) zwischen der Grundplatte (28) und dem Drehteller (30) befindet, so dass der Drehteller (30) einseitig gelagert um eine vertikale Achse drehbar ist.

2. Horizontal-Spritzgießmaschine nach Anspruch 1,
**dadurch gekennzeichnet, dass**
auf dem Drehteller (30) eine Trägervorrichtung für Formhälften (17, 17', 18,18') vorgesehen ist.

3. Horizontal-Spritzgießmaschine nach Anspruch 2,
**dadurch gekennzeichnet, dass**
die Trägervorrichtung zum Anbringen von mindestens zwei Formhälften (17, 18) ausgelegt ist.

4. Horizontalspritzgießmaschine nach Anspruch 3,
**dadurch gekennzeichnet, dass**
die Trägervorrichtung in Form einer Trägerplatte (32) ausgelegt ist.

5. Horizontal-Spritzgießmaschine nach Anspruch 2 oder 3,
**dadurch gekennzeichnet, dass**
die Trägervorrichtung zum Anbringen von vier Formhälften (17, 17', 18, 18') ausgelegt ist.

6. Horizontalspritzgießmaschine nach Anspruch 5,
**dadurch gekennzeichnet, dass**
die Trägervorrichtung in Form eines Trägerblocks (33) ausgelegt ist.

7. Horizontal-Spritzgießmaschine nach einem der Ansprüche 2 bis 6,
**dadurch gekennzeichnet, dass**
die Dreheinrichtung (26) Mittel für eine Höhenanpassung der Formhälften aufweist.

8. Horizontal-Spritzgießmaschine nach Anspruch 7,
**dadurch gekennzeichnet, dass**
als Mittel für die Höhenanpassung Adapterplatten (34) zum Abstützen der Formhälften (17, 17', 18, 18') auf dem Drehteller (30) vorgesehen sind.

9. Horizontal-Spritzgießmaschine nach einem der Ansprüche 1 bis 8,
**dadurch gekennzeichnet, dass**
die Horizontal-Spritzgießmaschine als Zwei-Platten-Maschine ausgebildet ist.

10. Horizontal-Spritzgießmaschine nach einem der Ansprüche 1 bis 9,
**dadurch gekennzeichnet, dass**
als Mittel zum Verfahren der Formaufspannplatten (6, 8) mindestens zwei hydraulische Verfahrzylinder (38) vorgesehen sind.

11. Horizontal-Spritzgießmaschine nach Anspruch 10,
**dadurch gekennzeichnet, dass**
die Verfahrzylinder (38) direkt an den beiden beweglichen Formaufspannplatten (6, 8) und an der stationären Grundplatte (28) angelenkt sind.

12. Horizontal-Spritzgießmaschine nach einem der Ansprüche 10 oder 11,
**dadurch gekennzeichnet, dass**
für jede Formaufspannplatte (6, 8) zwei Verfahrzylinder (38) vorgesehen sind, die bezüglich der Maschinenlängsachse gegenüberliegend angeordnet sind und jeweils im unteren seitlichen Bereich der Formaufspannplatten (6, 8) angreifen.

13. Horizontal-Spritzgießmaschine nach einem der Ansprüche 9 bis 12,
**dadurch gekennzeichnet, dass**
die Holme (14) an einer der beweglichen Formaufspannplatten (8) unter Zwischenschaltung von Mitteln zum Aufbringen des Schließdrucks angelagert sind, während sie in der anderen Formaufspannplatte (6) verschieblich gelagert sind.

14. Horizontal-Spritzgießmaschine nach Anspruch 13,
**dadurch gekennzeichnet, dass**
die Holme (14) an der Formaufspannplatte (6), in der sie verschieblich gelagert sind, verriegelbar ausgebildet sind.

## Claims

1. A horizontal injection moulding machine comprising two mould clamping plates (6, 8) which can be moved along a longitudinal axis of the machine, comprising a turning device (26) for mould halves (17, 17', 18, 18') arranged stationarily between the mould clamping plates, comprising means for moving the mould clamping plates (6, 8) relative to the turning device (26), comprising struts (14) between the mould clamping plates (6, 8) for receiving the closing force, comprising a machine bed on which the two mould clamping plates (6, 8) and the turning device (26) are arranged, wherein the turning device (26) comprises a base plate (28) mounted on the machine bed (2) and fixedly connected thereto, on which a rotary table (30) is rotatably mounted and wherein the mounting (36) between the base plate (28) and the rotary table (30) is located so that the rotary table (30) can be rotated about a vertical axis in a unilaterally mounted position.

2. The horizontal injection moulding machine according to claim 1, **characterised in that** a support device for mould halves (17, 17', 18, 18') is provided on the rotary table (30).

3. The horizontal injection moulding machine according to claim 2, **characterised in that** the support device is designed for attachment of at least two mould halves (17, 18).

4. The horizontal injection moulding machine according to claim 3, **characterised in that** the support device is designed in the form of a support plate (32).

5. The horizontal injection moulding machine according to claim 2 or 3, **characterised in that** the support device is designed for attachment of four mould halves (17, 17', 18, 18').

6. The horizontal injection moulding machine according to claim 5, **characterised in that** the support device is designed in the form of a support block (33).

7. The horizontal injection moulding machine according to any one of claims 2 to 6, **characterised in that** the turning device (26) comprises means for height adjustment of the mould halves.

8. The horizontal injection moulding machine according to claim 7, **characterised in that** adapter plates (34) for supporting the mould halves (17, 17, 18, 18') on the rotary table (30) are provided as means for height adjustment.

9. The horizontal injection moulding machine according to any one of claims 1 to 8, **characterised in that** the horizontal injection moulding machine is configured as a two-plate machine.

10. The horizontal injection moulding machine according to any one of claims 1 to 9, **characterised in that** at least two hydraulic positioning cylinders (38) are provided as means for moving the mould clamping plates (6, 8).

11. The horizontal injection moulding machine according to claim 10, **characterised in that** the positioning cylinder (38) is directly hinged to the two movable mould clamping plates (6, 8) and to the stationary base plate (28).

12. The horizontal injection moulding machine according to any one of claims 10 or 11, **characterised in that** two positioning cylinders (38) are provided for each mould clamping plate (6, 8), which cylinders are arranged oppositely relative to the longitudinal axis of the machine and each act in the lower lateral region of the mould clamping plates (6, 8).

13. The horizontal injection moulding machine according to any one of claims 9 to 12, **characterised in that** the struts (14) are mounted on one of the movable mould clamping plates (8) with interposed means for applying the closing pressure whilst they are displaceably mounted in the other mould clamping plate (6).

14. The horizontal injection moulding machine according to claim 13, **characterised in that** the struts (14) are configured as lockable on the mould clamping plate (6) in which they as displaceably mounted.

## Revendications

1. Machine de moulage par injection horizontale comportant deux plaques de montage de moules (6, 8) mobiles le long d'un axe longitudinal de la machine, un dispositif tournant (26) disposé de manière stationnaire entre les plaques de montage de moules pour des moitiés de moules (17, 17', 18, 18'), des moyens de déplacement des plaques de montage de moules (6, 8) par rapport au dispositif tournant (26), des traverses (14) entre les deux plaques de montage de moules (6, 8) pour absorber la force de fermeture, un banc de machine sur lequel les deux plaques de montage de moules (6, 8) et le dispositif tournant (26) sont disposés, le dispositif tournant (26) présentant une plaque de base (28) s'appuyant sur le banc de machine (2) et reliée fixement à celui-ci et sur laquelle un plateau tournant (30) s'appuie en rotation, et le palier (36) se trouvant entre la plaque de base (28) et le plateau tournant (30), de sorte que le plateau tournant (30) s'appuie d'un côté et peut tourner autour d'un axe vertical.

2. Machine de moulage par injection horizontale selon la revendication 1,
**caractérisée en ce que**
il est prévu sur le plateau tournant (30) un dispositif support pour les moitiés de moules (17, 17', 18, 18').

3. Machine de moulage par injection horizontale selon la revendication 2,
**caractérisée en ce que**
le dispositif support est conçu pour y mettre au moins deux moitiés de moules (17, 18,).

4. Machine de moulage par injection horizontale selon la revendication 3,
**caractérisée en ce que**
le dispositif support est conçu sous forme d'une plaque support (32).

5. Machine de moulage par injection horizontale selon la revendication 2 ou 3,
**caractérisée en ce que**
le dispositif support est conçu pour y mettre au moins quatre moitiés de moules (17, 17', 18, 18').

6. Machine de moulage par injection horizontale selon la revendication 5,
**caractérisée en ce que**
le dispositif support est conçu sous forme d'un bloc support (33).

7. Machine de moulage par injection horizontale selon une des revendications 2 à 8,
**caractérisée en ce que**
le dispositif tournant (26) comprend des moyens d'adaptation à la hauteur des moitiés de moules.

8. Machine de moulage par injection horizontale selon la revendication 7,
**caractérisée en ce que**
il est prévu comme moyens d'adaptation à la hauteur des plaques d'adaptation (34) pour appuyer les moitiés de moule (17, 17', 18, 18') sur le plateau tournant (30).

9. Machine de moulage par injection horizontale selon une des revendications 1 à 8,
**caractérisée en ce que**
la machine de moulage par injection horizontale est réalisée sous forme d'une machine à deux plaques.

10. Machine de moulage par injection horizontale selon une des revendications 1 à 9,
**caractérisée en ce que**
il est prévu comme moyens de déplacement des plaques de montage de moule (6, 8) au moins deux vérins hydrauliques de déplacement (38).

11. Machine de moulage par injection horizontale selon la revendication 10,
**caractérisée en ce que**
les vérins de déplacement (38) s'articulent directement aux deux plaques de montage de moule mobiles (6, 8) et à la plaque de base stationnaire (28).

12. Machine de moulage par injection horizontale selon une des revendications 10 ou 11,
**caractérisée en ce que**,
pour chaque plaque de montage de moule (6, 8), il est prévu deux vérins de déplacement (38) qui sont disposés à l'opposé par rapport à l'axe longitudinal de la machine et s'engrènent respectivement dans la zone latérale inférieure des plaques de montage de moule (6, 8).

13. Machine de moulage par injection horizontale selon une des revendications 9 à 12,
**caractérisée en ce que**
les traverses (14) s'appuient sur une des plaques de montage de moule mobiles (8) avec interposition de moyens d'application de la pression de fermeture, tandis qu'ils s'appuient de manière à pouvoir se déplacer dans l'autre plaque de montage de moule (6).

14. Machine de moulage par injection horizontale selon la revendication 13,
**caractérisée en ce que**
les traverses (14) sont réalisées de manière à pouvoir être verrouillées sur la plaque de montage de moule (6) dans laquelle elles s'appuient de manière à pouvoir se déplacer.
